# EUROPÄISCHE PATENTSCHRIFT

(11) **EP 2 037 153 B1**
(45) Veröffentlichungstag und Bekanntmachung des Hinweises auf die Patenterteilung: **13.02.2013**
(21) Anmeldenummer: 08104802.7
(22) Anmeldetag: 21.07.2008
(51) Int. Cl.: F16H 57/02, F16B 2/22, F16B 17/00, F16B 21/06

(54) **Getriebegehäuse**
Transmission housing
Boîtier pour boîte de vitesse

(30) Priorität: 17.09.2007 DE 102007044351
(43) Veröffentlichungstag der Anmeldung: 18.03.2009
(73) Patentinhaber: Robert Bosch GmbH, 70442 Stuttgart (DE)
(72) Erfinder: Genter, Gerhard, 77855, Achern (DE); Meier, Andreas, 77815, Buehl-Eisental (DE); Schmidt, Willi, 76297, Stutensee-Buechig (DE)

(56) Entgegenhaltungen:
- WO-A1-99/00885
- DE-A1-102005 038 050
- DE-A1-102005 045 438
- JP-A- 9 329 215
- US-A1- 2005 109 155

## Beschreibung

### Stand der Technik

Die Erfindung betrifft ein Getriebegehäuse, insbesondere für Kraftfahrzeugsitzverstellantriebe, gemäß dem Oberbegriff des Anspruchs 1.

Ein derartiges Getriebegehäuse ist bereits aus der US 2005/109155A1 bekannt. Bei dem bekannten Getriebegehäuse ist ein Rastmechanismus zum Verbinden seiner beiden Gehäuseteile vorgesehen, bei dem ein Rasthaken eines Gehäusegrundkörpers in eine Aussparung eines Federelementes eingreift. Hierbei weist das Federelement eine relativ große Axialerstreckung auf und ragt bei montiertem Getriebegehäuse bis in den Bereich des Gehäusegrundkörpers.

Weiterhin ist es beispielweise bekannt, den Gehäusedeckel am Gehäusegrundkörper mit Hilfe dreier Schrauben und zusätzlich mittels dreier Schnapphaken zu befestigen, wobei die am Gehäusedeckel angeordneten Schnapphaken die Umfangswand in radialer Richtung überragen und mit in radialer Richtung aus der Umfangswand hervorstehenden Nasen verrastet sind. Daneben existieren Lösungen, bei denen der Gehäusedeckel ausschließlich mit Hilfe von den zuvor beschriebenen Schnapphaken am Gehäusegrundkörper festgelegt ist. Allen bisher bekannten Befestigungsmöglichkeiten ist gemeinsam, dass sie den Einbauradius des Getriebegehäuses vergrößern.

### Offenbarung der Erfindung

Der Erfindung liegt daher die Aufgabe zugrunde, ein Getriebegehäuse nach dem Oberbegriff des Anspruchs 1 derart weiterzubilden, dass ein besonders kompakter Aufbau des Getriebegehäuses erzielt wird. Diese Aufgabe wird bei einem Getriebegehäuse mit den Merkmalen des Anspruchs 1 gelöst. Vorteilhafte Weiterbildungen der Erfindung sind in den Unteransprüchen angegeben.

Durch eine entsprechende Anordnung eines derart ausgebildeten Rastmechanismus mit einem sich in Umfangsrichtung erstreckenden und an beiden Endseiten am Getriebegehäuse angebundenen Federelement ist es möglich, eine Getriebegehäusekonfiguration zu schaffen, bei der das Federelement im verrasteten Zustand die Umfangswand des Gehäusegrundkörpers in radialer Richtung nicht überragt, sondern sich vollständig oberhalb der freien oberen Stirnseite der Umfangswand befindet oder ggf. teilweise nach radial innen versetzt ist.

Besonders bevorzugt ist eine Ausführungsform, bei der der Gehäusedeckel und/oder der Gehäusegrundkörper als Spritzgussteil aus Kunststoff ausgebildet sind/ist und das mindestens eine Federelement, vorzugsweise mehrere in Umfangsrichtung beabstandet angeordnete Federelemente, einstückig im Spritzgussverfahren an den Gehäusedeckel oder den Gehäusegrundkörper angeformt wird/werden. Durch die einstückige Ausbildung des Federelementes mit dem Gehäusedeckel oder dem Gehäusegrundkörper kann ein Montageschritt zur Festlegung der Federelemente am Gehäusedeckel oder am Gehäusegrundkörper entfallen.

Bevorzugt ist eine Hakenelementkonfiguration, bei der das Hakenelement und insbesondere seine bevorzugt nach radial außen ragende Nase die Umfangswand des Gehäusegrundkörpers in radialer Richtung nicht überragt. Dies kann insbesondere dadurch erreicht werden, dass das Hakenelement je nach Anordnung des Federelementes in axialer Richtung benachbart zur Umfangswand des Gehäusegrundkörpers bzw. in axialer Richtung benachbart zu einem umlaufenden Kragen des Gehäusedeckels angeordnet ist und sich ausgehend von der freien Stirnseite der Umfangswand bzw. ausgehend von der freien Stirnseite des Kragens in axialer Richtung erstreckt. Dabei sollte das Hakenelement so weit nach radial innen zurückversetzt sein, dass es die Umfangswand und/oder den Kragen nach außen nicht überragt.

Besonders bevorzugt ist eine Ausführungsform, bei der sich das Federelement ausschließlich in axialer Richtung benachbart zur Umfangswand des Getriebegehäuses oder ausschließlich benachbart zum umlaufenden Kragen des Gehäusedeckels befindet, also das Federelement die äußere Umfangswand des Gehäusegrundkörpers im fixierten Zustand nicht nach radial außen überragt, wodurch der Einbauradius des Getriebegehäuses optimal minimierbar ist.

Besonders vorteilhaft ist es, wenn das Federelement am Gehäusedeckel und das Hakenelement am Gehäusegrundkörper angeordnet ist. Dabei ist das Federelement in Bezug auf die Außenfläche der Umfangswand des Gehäusegrundkörpers am Gehäusedeckel so weit nach radial innen versetzt angeordnet, dass es die Umfangswand zumindest bei am Gehäusegrundkörper festgelegtem Gehäusedeckel in radialer Richtung nach außen nicht überragt. Um dies zu gewährleisten, ragt das dem Federelement zugeordnete Hakenelement in axialer Richtung über die Umfangswand des Gehäusegrundkörpers heraus, bevorzugt ohne dabei in radialer Richtung über die Umfangswand des Gehäusegrundkörpers hinauszuragen.

Bevorzugt ist das Federelement relativ zu dem Hakenelement derart angeordnet, dass das Hakenelement von einem in Umfangsrichtung gesehen mittigen Bereich des Federelementes, also von dem Bereich maximaler radialer Auslenkbarkeit, hintergriffen wird.

Zur Erzielung einer optimalen Federwirkung des Federelementes in radialer Richtung, insbesondere in radialer Richtung nach außen, ist in Weiterbildung der Erfindung vorgesehen, dass die in Umfangsrichtung gesehen seitlich des Hintergreifungsbereichs des Federelementes gelegenen Federelementabschnitte in einer Draufsicht auf den Gehäusedeckel betrachtet S-förmig konturiert sind, so dass der die Nase des Hakenelementes hintergreifende mittlere Abschnitt, der vorzugsweise als zuvor beschriebener Ausnehmungsabschnitt ausgebildet ist, den größten radialen Abstand zu einem umlaufenden Kragen des Gehäusedeckels aufweist, der jedoch nur so klein bemessen ist, dass das Federelement im verriegelten Zustand die Umfangswand des Getriebegehäuses nicht überragt.

Besonders bevorzugt ist eine Ausführungsform, bei der das Federelement an einem Kragen des Gehäusedeckels angeordnet ist, wobei sich der Kragen vorzugsweise in Umfangsrichtung um den gesamten Gehäusedeckel erstreckt.

Zur Erleichterung der Montage ist eine Ausführungsform von Vorteil, bei der zwischen zwei in Umfangsrichtung beabstandeten Federelementen ein in axialer Richtung weisender Zentrierfortsatz am Gehäusedeckel vorgesehen ist, der mit einer inneren Ausnehmung in der Gehäuseumfangswand zentrierend zusammenwirkt. Besonders bevorzugt ist eine Ausführungsform, bei der zwischen sämtlichen in Umfangsrichtung beabstandeten Federelementen jeweils mindestens ein in axialer Richtung weisender Zentrierfortsatz vorgesehen ist.

Aus Stabilitätsgründen und zur Erleichterung der Montage ist eine Ausführungsform von Vorteil, bei der das Hakenelement so starr ausgebildet ist, dass es beim Fixieren des Gehäusedeckels mit dem zugehörigen Federelement nicht oder ggf. nur geringfügig nach radial innen ausgelenkt wird.

Von besonderem Vorteil ist eine Ausführungsform des Getriebegehäuses, bei der neben den Rastmechanismen und ggf. den Zentrierfortsätzen keine weiteren Befestigungsmittel wie Schrauben, etc. zur Fixierung des Gehäusedeckels am insbesondere wannenförmig ausgebildeten Gehäusegrundkörper vorgesehen sind.

### Kurze Beschreibung der Zeichnungen

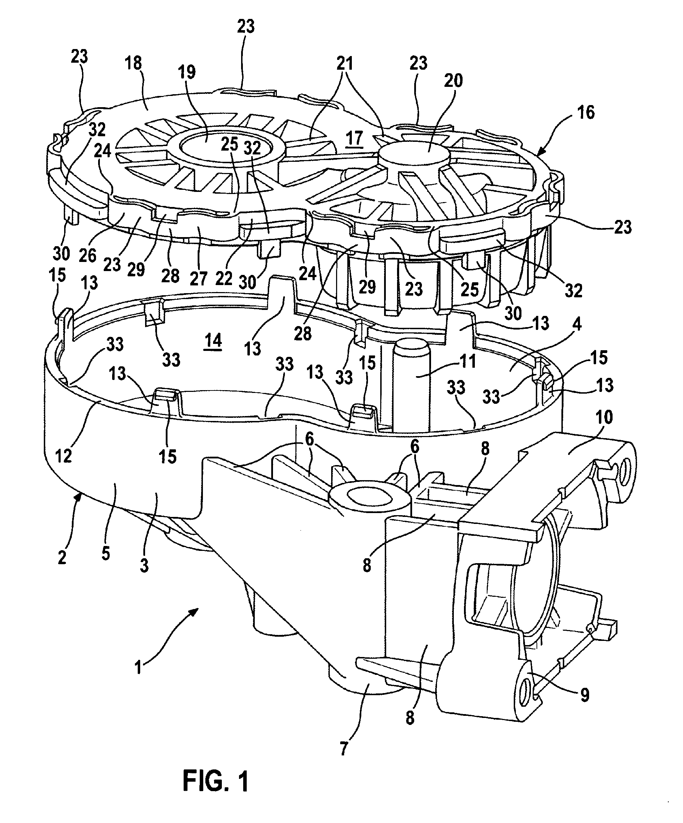

In der einzigen Fig. 1 ist ein Getriebegehäuse mit einem Gehäusedeckel und einem wannenförmigen Gehäusegrundkörper in einer Explosionsdarstellung gezeigt.

### Ausführungsform der Erfindung

Das in Fig. 1 gezeigte, nicht fertig montierte Getriebegehäuse 1 aus Kunststoff umfasst einen wannenartig ausgebildet, tailliert geformten Gehäusegrundkörper 2 mit zwei Rundungsabschnitten 3, 4. Der Gehäusegrundkörper 2 weist eine sich in Umfangsrichtung erstreckende Umfangswand 5 auf, die geometrisch betrachtet von einer Vielzahl in Umfangsrichtung nebeneinander angeordneten parallelen Strecken gebildet ist.

Von der Umfangswand 5 erstrecken sich in radiale Richtungen mehrere Befestigungsstreben 6, die an einem hohlzylindrischen Abschnitt 7 angrenzen, dessen Längserstreckung parallel zu der Axialerstreckung der Umfangswand 5 verläuft. Der hohlzylindrische Abschnitt 7 sowie eine in der Zeichnungsebene rechte, an die Umfangswand 5 angrenzende Befestigungsstrebe 6 grenzen wiederum an drei Parallelstreben 8 an, die an ihrem äußeren Ende einen Befestigungsflansch 9 für einen Elektromotor halten. Der Befestigungsflansch 9 ist an seinem in der Zeichnungsebene hinteren Ende 10 einstückig mit der Umfangswand 5 des Gehäusegrundkörpers 2 ausgebildet.

Innerhalb des Gehäusegrundkörpers 2 ist ein sich in axialer Richtung erstreckender Lagerbolzen 11 für ein Schneckenrad eines in dem Getriebegehäuse 1 anordenbaren Schneckengetriebes angeordnet.

Von einer oberen freien Stirnfläche 12 des Gehäusegrundkörpers 2 erstrecken sich in axialer Richtung sechs in Umfangsrichtung beabstandete starre Hakenelemente 13, deren rückwärtige Wand planeben in die innere Fläche 14 der Umfangswand 5 übergeht. Jedes Hakenelement 13 ist mit einer in radialer Richtung weisenden Nase 15 versehen, wobei die Nasen 15 die Umfangswand 5 in radialer Richtung nicht überragen.

Dem als Spritzgussteil aus Kunststoff ausgebildeten Gehäusegrundkörper 2 ist ein ebenfalls als Spritzgussteil aus Kunststoff ausgebildeter Gehäusedeckel 16 zugeordnet, dessen Umfangskontur im Wesentlichen formkongruent zum Gehäusegrundkörper 2 ausgebildet ist. Der Gehäusedeckel 16 weist auf seiner Oberseite 17 einen äußeren ringförmigen Abschnitt 18 auf, der zwei zentrische Abschnitte 19, 20 umschließt. Der linke zentrische Abschnitt 19 ist als Durchgangsöffnung für eine Abtriebswelle und der zentrische Abschnitt 20 als Axialanlauf für ein auf dem Lagerbolzen 11 aufzunehmendes Schneckenrad ausgebildet. Die zentrischen Abschnitte 19, 20 sind über in radialer Richtung verlaufende Verstärkungsstreben 21 an dem ringförmigen äußeren Abschnitt 18 angebunden.

Der Gehäusedeckel 16 weist einen umlaufenden, sich im rechten Winkel zur Oberseite 17 nach unten erstreckenden Kragen 22 auf, der sechs in Umfangsrichtung beabstandete Federelemente 23 trägt, wobei jedes sich in Umfangsrichtung erstreckende Federelement 23 zum Zusammenwirken mit einem diesem zugeordneten Hakenelement 13 mit Nase 15 ausgebildet ist.

Die Federelemente 23 sind jeweils in zwei in Umfangsrichtung beabstandeten Bereichen 24, 25 an den Kragen 22 durch einstückige Ausbildung mit diesem angebunden. Ausgehend von diesen in Umfangsrichtung beabstandeten Bereichen 24, 25 erstrecken sich zwei in einer Draufsicht betrachtet S-förmige Abschnitte 26, 27 in Richtung eines mittigen Ausnehmungsabschnittes 28 des spangenförmigen Federelementes 23. Aufgrund der S-förmigen Ausbildung der Abschnitte 26, 27 kann der Ausnehmungsabschnitt 28 elastisch in radialer Richtung nach außen verstellt werden. Der Ausnehmungsabschnitt 28 ist gegenüber den Abschnitten 26, 27 in axialer Richtung reduziert, wodurch eine Ausnehmung 29 gebildet ist. In dieser Ausnehmung 29 wird die entsprechende Nase 15 des zugeordneten Hakenelementes 19 im verriegelten Zustand aufgenommen. Dabei entspricht die Erstreckung der Ausnehmung 29 in Umfangsrichtung der Erstreckung der Nase 15 in Umfangsrichtung zuzüglich eines geringen Spiels. Im fixierten Zustand hintergreift der Ausnehmungsabschnitt 28 die in der Zeichnungsebene untere Seite der Nase 15. Anders ausgedrückt liegt die untere Seite der Nase 15 auf der oberen freien Stirnfläche des Ausnehmungsabschnittes 28 im verriegelten Zustand auf, bzw. ist mit dieser verspannt.

Zur Zentrierung und zur Optimierung der Verbindung aus Gehäusedeckel 16 und Gehäusegrundkörper 2 sind dem Gehäusedeckel 16 zugeordnete, in axialer Richtung weisende Zentrierfortsätze 30 vorgesehen. Zwischen jeweils zwei benachbarten Federelementen 23 befindet sich ein derartiger Zentrierfortsatz 30. Jeder Zentrierfortsatz 30 ist an einem Verstärkungsabschnitt 32 angeformt, wobei die Verstärkungsabschnitte 32 in radialer Richtung vor dem gegenüber der Außenfläche der Umfangswand 5 zurückversetzten Kragen 22 angeordnet sind. Jedem Zentrierfortsatz 30 ist eine hintere, nach hinten und oben offene Ausnehmung 33 an der Umfangswand 5 des Gehäusegrundkörpers zugeordnet, wobei die Ausnehmungen 33 im Wesentlichen formkongruent zu dem zugehörigen Zentrierfortsatz 30 ausgebildet ist. Die Ausnehmungen 33 geben den Zentrierfortsätzen 30 einen seitlichen Halt und sorgen somit für eine wackelfreie Verbindung zwischen Gehäusegrundkörper 2 und Gehäusedeckel 16.

Im am Gehäusegrundkörper 2 fixierten Gehäusedeckel 16 wird die Außenfläche der Umfangswand 5 in radialer Richtung nach außen von dem Gehäusedeckel 16, insbesondere von den Federelementen 23 und den zwischen diesen angeordneten Verstärkungsabschnitten 32 nicht überragt, so dass sich der Einbauradius des Getriebegehäuses 1 aufgrund der Befestigungsmittel nicht vergrößert, also bauraumoptimiert ist.

## Patentansprüche

1. Getriebegehäuse, insbesondere für Kraftfahrzeugsitzverstellgetriebe, mit einem eine Umfangswand (5) aufweisenden Gehäusegrundkörper (2) und einem Gehäusedeckel (16) sowie mit mindestens einem ein in radialer Richtung in Bezug auf eine Umfangskontur des Gehäusedeckels (16) oder des Gehäusegrundkörpers (2) federndes Federelement (23) aufweisenden Rastmechanismus zur Fixierung des Gehäusedeckels (16) am Gehäusegrundkörper (2), wobei sich das Federelement (23) in Umfangsrichtung des Getriebegehäuses (1) erstreckt und in zwei in Umfangsrichtung des Getriebegehäuses (1) beabstandeten Bereichen (24, 25) am Getriebegehäuse (1) angebunden ist, und wobei der Rastmechanismus ein sich in axialer Richtung erstreckendes Hakenelement (13) mit einer radialen Nase (15) aufweist, die von dem Federelement (23) bei an dem Gehäusegrundkörper (2) fixiertem Gehäusedeckel (16) hintergriffen wird,
**dadurch gekennzeichnet,**
**dass** die Nase (15) des Hakenelementes (13) bei an dem Grundkörper (2) fixierten Gehäusedeckel (16) in einem in axialer Richtung reduzierten Ausnehmungsabschnitt (28) des Federelementes (23) aufgenommen ist und vorzugsweise dieses in radialer Richtung in Bezug auf die Umfangskontur des Gehäusedeckels (16) oder des Gehäusegrundkörpers (2) nach außen nicht überragt.

2. Getriebegehäuse nach Anspruch 1,
**dadurch gekennzeichnet,**
**dass** Federelement (23) derart ausgebildet und angeordnet ist, dass es beim Fixieren des Gehäusedeckels (16) am Grundkörper (2) in radialer Richtung elastisch nach außen federt und bei an dem Gehäusegrundkörper (2) fixierten Gehäusedeckel (16) die Umfangswand (5) des Gehäusegrundkörpers (2) in radialer Richtung nach außen nicht überragt.

3. Getriebegehäuse nach einem der vorhergehenden Ansprüche,
**dadurch gekennzeichnet,**
**dass** das Federelement (23) am Gehäusedeckel (16) und das Hakenelement (13) am Gehäusegrundkörper (2) angeordnet ist.

4. Getriebegehäuse nach Anspruch 3,
**dadurch gekennzeichnet,**
**dass** die Bereiche (24, 25), in denen das Federelement (23) an den Gehäusedeckel (16) angebunden sind, zumindest näherungsweise gleichmäßig von dem Hakenelement (13) in Umfangsrichtung beabstandet angeordnet sind.

5. Getriebegehäuse nach Anspruch 1,
**dadurch gekennzeichnet,**
**dass** das Federelement (23) in einer Draufsicht auf den Gehäusedeckel (16) in den Abschnitten (26, 27) zwischen dem Ausnehmungsabschnitt (28) und den Bereichen (24, 25), in denen das Federelement (23) an den Gehäusedeckel (16) angebunden ist, zumindest näherungsweise S-förmig ausgeformt ist.

6. Getriebegehäuse nach einem der vorhergehenden Ansprüche,
**dadurch gekennzeichnet,**
**dass** das Federelement (23) an einem im rechten Winkel zu einer Oberseite (17) des Gehäusedeckels (16) verlaufenden Kragen (22) des Gehäusedeckels (16) angeordnet ist.

7. Getriebegehäuse nach einem der vorhergehenden Ansprüche,
**dadurch gekennzeichnet,**
**dass** zwischen mindestens zwei der Rastmechanismen ein sich in axialer Richtung erstreckender Zentrierfortsatz (30) angeordnet ist, der mit einer inneren Ausnehmung (29) in der Umfangswand (5) des Gehäusegrundkörpers (2) zusammenwirkend angeordnet ist.

8. Getriebegehäuse nach einem der Ansprüche 1 bis 7,
**dadurch gekennzeichnet,**
**dass** das Hakenelement (13) starr ist.

9. Getriebegehäuse nach einem der vorhergehenden Ansprüche, **dadurch gekennzeichnet,**
**dass** das Getriebegehäuse (1) ausschließlich durch mehrere in Umfangsrichtung beabstandete Rastmechanismen an dem Gehäusegrundkörper (2) festlegbar ist.

## Claims

1. Gearbox housing, in particular for motor vehicle seat adjustment gearings, with a housing basic body (2) having a circumferential wall (5), and a housing cover (16) and also with at least one latching mechanism which has a spring element (23) spring-mounted in the radial direction with respect to a circumferential contour of the housing cover (16) or of the housing basic body (2), for fixing the housing cover (16) on the housing basic body (2), wherein the spring element (23) extends in the circumferential direction of the gearbox housing (1) and is connected to the gearbox housing (1) in two regions (24, 25) spaced apart in the circumferential direction of the gearbox housing (1), and wherein the latching mechanism has a hook element (13) which extends in the axial direction and has a radial lug (15) which is engaged behind by the spring element (23) when the housing cover (16) is fixed on the housing basic body (2), **characterized in that**, when the housing cover (16) is fixed on the basic body (2), the lug (15) of the hook element (13) is received in a recess section (28) of the spring element (23), the recess section being reduced in the axial direction, and preferably does not protrude over said recess section outwards in the radial direction with respect to the circumferential contour of the housing cover (16) or of the housing basic body (2).

2. Gearbox housing according to Claim 1, **characterized in that** the spring element (23) is designed and arranged in such a manner that it springs elastically outwards in the radial direction during the fixing of the housing cover (16) on the basic body (2) and, when the housing cover (16) is fixed on the housing basic body (2), does not protrude outwards in the radial direction over the circumferential wall (5) of the housing basic body (2).

3. Gearbox housing according to either of the preceding claims, **characterized in that** the spring element (23) is arranged on the housing cover (16) and the hook element (13) is arranged on the housing basic body (2).

4. Gearbox housing according to Claim 3, **characterized in that** the regions (24, 25) in which the spring element (23) is connected to the housing cover (16) are spaced apart in the circumferential direction at least approximately uniformly from the hook element (13).

5. Gearbox housing according to Claim 1, **characterized in that**, in a top view of the housing cover (16), the spring element (23) is formed at least approximately in an S-shaped manner in the sections (26, 27) between the recess section (28) and the regions (24, 25) in which the spring element (23) is connected to the housing cover (16).

6. Gearbox housing according to one of the preceding claims, **characterized in that** the spring element (23) is arranged on a collar (22) of the housing cover (16), the collar running at a right angle to an upper side (17) of the housing cover (16).

7. Gearbox housing according to one of the preceding claims, **characterized in that** a centring extension (30) which extends in the axial direction and is arranged so as to interact with an inner recess (29) in the circumferential wall (5) of the housing basic body (2) is arranged between at least two of the latching mechanisms.

8. Gearbox housing according to one of Claims 1 to 7, **characterized in that** the hook element (13) is rigid.

9. Gearbox housing according to one of the preceding claims, **characterized in that** the gearbox housing (1) is fixable to the housing basic body (2) exclusively by a plurality of latching mechanisms which are spaced apart in the circumferential direction.

## Revendications

1. Boîtier de transmission, en particulier pour une transmission de réglage d'un siège de véhicule automobile, comprenant un corps de base de boîtier (2) présentant une paroi périphérique (5) et un couvercle de boîtier (16), ainsi qu'au moins un mécanisme d'encliquetage pour la fixation du couvercle de boîtier (16) sur le corps de base de boîtier (2), présentant un élément de ressort (23) agissant élastiquement dans la direction radiale par rapport à un contour périphérique du couvercle de boîtier (16) ou du corps de base de boîtier (2), l'élément de ressort (23) s'étendant dans la direction périphérique du boîtier de transmission (1) et étant raccordé au boîtier de transmission (1) en deux régions (24, 25) espacées dans la direction périphérique du boîtier de transmission (1), le mécanisme d'encliquetage présentant un élément de crochet (13) s'étendant dans la direction axiale avec un ergot radial (15) qui est saisi par l'arrière par l'élément de ressort (23) lorsque le couvercle de boîtier (16) est fixé sur le corps de base de boîtier (2),
**caractérisé en ce que**
l'ergot (15) de l'élément de crochet (13), lorsque le couvercle de boîtier (16) est fixé sur le corps de base (2), est reçu dans une portion d'évidement (28) de l'élément de ressort (23) réduite dans la direction axiale, et de préférence ce dernier ne dépasse pas vers l'extérieur dans la direction radiale par rapport au contour périphérique du couvercle de boîtier (16) ou du corps de base de boîtier (2).

2. Boîtier de transmission selon la revendication 1, **caractérisé en ce que**
l'élément de ressort (23) est réalisé et disposé de telle sorte qu'il agisse élastiquement dans la direction radiale lors de la fixation du couvercle de boîtier (16) sur le corps de base (2), et que la paroi périphérique (5) du corps de base de boîtier (2) ne dépasse pas vers l'extérieur dans la direction radiale lorsque le couvercle de boîtier (16) est fixé sur le corps de base de boîtier (2).

3. Boîtier de transmission selon l'une quelconque des revendications précédentes,
**caractérisé en ce que**
l'élément de ressort (23) est disposé sur le couvercle de boîtier (16) et l'élément de crochet (13) est disposé sur le corps de base de boîtier (2).

4. Boîtier de transmission selon la revendication 3, **caractérisé en ce que**
les régions (24, 25) dans lesquelles l'élément de ressort (23) est raccordé au couvercle de boîtier (16) sont disposées de manière espacée au moins approximativement uniformément de l'élément de crochet (13) dans la direction périphérique.

5. Boîtier de transmission selon la revendication 1, **caractérisé en ce que**
l'élément de ressort (23) en vue de dessus du couvercle de boîtier (16), dans les portions (26, 27) entre la portion d'évidement (28) et les régions (24, 25), dans lesquelles l'élément de ressort (23) est raccordé au couvercle de boîtier (16), est façonné au moins approximativement en forme de S.

6. Boîtier de transmission selon l'une quelconque des revendications précédentes,
**caractérisé en ce que**
l'élément de ressort (23) est disposé au niveau d'un rebord (22) du couvercle de boîtier (16) s'étendant à angle droit par rapport à un côté supérieur (17) du couvercle de boîtier (16).

7. Boîtier de transmission selon l'une quelconque des revendications précédentes,
**caractérisé en ce**
**qu'**entre au moins deux des mécanismes d'encliquetage est disposée une saillie de centrage (30) s'étendant dans la direction axiale, qui est disposée de manière à coopérer avec un évidement interne (29) dans la paroi périphérique (5) du corps de base de boîtier (2).

8. Boîtier de transmission selon l'une quelconque des revendications 1 à 7,
**caractérisé en ce que**
l'élément de crochet (13) est rigide.

9. Boîtier de transmission selon l'une quelconque des revendications précédentes,
**caractérisé en ce que**
le boîtier de transmission (1) peut être fixé exclusivement par plusieurs mécanismes d'encliquetage espacés dans la direction périphérique sur le corps de base de boîtier (2).
